Europäisches Patentamt

European Patent Office

Office européen des brevets

(11) Publication number: **0 402 988**
**A2**

## EUROPEAN PATENT APPLICATION

(21) Application number: 90201446.3

(51) Int. Cl.5: **G21D 7/00, G21B 1/00**

(22) Date of filing: 06.06.90

(30) Priority: 14.06.89 IT 2086589
26.02.90 IT 1947690

(43) Date of publication of application:
**19.12.90 Bulletin 90/51**

(84) Designated Contracting States:
**AT BE CH DE DK ES FR GB GR IT LI LU NL SE**

(71) Applicant: **ECOLINE ANTICORROSION S.r.l.**
**Via S. Giuliana 3**
**Muggio' (Milano)(IT)**

(72) Inventor: **Bagnulo, Luigi**
**Via A. Volta 18**
**Milano(IT)**

(74) Representative: **Raimondi, Alfredo, Dott. Ing.**
**Prof. et al**
**Dott. Ing. Prof. RAIMONDI ALFREDO S.r.l.**
**Piazzale Cadorna 15**
**I-20123 Milano(IT)**

(54) **A process with relevant plants and devices for the production of energy through the industrial application of plausible dynamics concerning so-called controlled cold nuclear fusion.**

(57) The invention relates to the process, relevant plants and devices for the industrial production of energy, based on plausible dynamics explanatory of nuclear fusion in metals- particularly so in palladium and titanium - which readily absorb hydrogen and its isotopes; said process is based on the absorption by these metals, through electrolysis or gas-pressurizing of deuterium or mixtures of the latter with tritium or helium, followed by their consequent liberation within cracks, created in the metal mass either by mechanical or metallurgical means.

FIG. 1

EP 0 402 988 A2

## A process with relevant plants and devices for the production of energy through the industrial application of plausible dynamics concerning so-called controlled cold nuclear fusion

The invention relates to the process, relevant plants and devices for the industrial production of energy, based on plausible dynamics explanatory of nuclear fusion in metals -particularly so in palladium and titanium - which readily absorb hydrogen and its isotopes; said process is based on the absorption by these metals, through electrolysis or gas-pressurizing, of deuterium or mixtures thereof with tritium or helium, followed by their consequent liberation within cracks, created in the metal mass either by mechanical or metallurgical means.

Nuclear fusion among deuterium atoms only occurs if the kinetic energy of their nuclei reaches such high values as to let them exceed the Coulomb barrier generated by the repulsive forces of their own electric charges.

Once this barrier is surpassed, which takes place among nuclei the moment they come within a distance of $10^{-12}$ mm of one another, nuclear forces are activated and only these forces can bring about nuclear fusion.

To raise the kinetic energy value of nuclei sufficiently, so as to cause fusion, it is necessary either to heat them to beyond 100,000,000 (one hundred million) degrees centigrade or to subject them to a pressure exceeding 1000,000,000,000 ( one thousand billion ) atmospheres.

The former solution is approached by means of the so-called "magnetic confinement" method whereas the latter by means of the so-called "inertial confinement" method.

Both processes, however, fall short of concrete results.

After a third so-called "muonic" method, which appears to be of no practical interest, a fourth method termed "cold fusion" has currently been included in the race towards nuclear energy.

This method is based on the property certain metals have, with particular reference to palladium and titanium, of being able to absorb large volumes of hydrogen and its isotopes. It is also founded on the postulation that primary nuclear fusions of deuterium-deuterium occur among deuterium atoms, whenever they are forcedly clustered within the crystal lattices of said metals, with the formation of helium plus a neutron and the release of energy as herebelow:

1) $D_1^2 + D_1^2 \rightarrow He_2^3 + n_0^1 + 3,27$ MeV and the formation of tritium plus hydrogen and the release of energy as herebelow:

2) $D_1^2 + D_1^2 \rightarrow T_1^3 + H_1^1 + 4,03$ MeV which could further cause secondary fusions between deuterium and tritium with the formation of a helium isotope plus a neutron and the release of energy as herebelow:

3) $D_1^2 + T_1^3 \rightarrow He_2^4 + n_0^1 + 17,50$ MeV or between deuterium and helium with the formation of a helium isotope plus hydrogen and the release of energy as herebelow:

4) $D_1^2 + He_2^3 \rightarrow He_2^4 + H_1^1 + 18,34$ MeV

Since the two primary reactions both come about in a ratio of 50:50, the presence of neutrons is an indication of the occurrence of cold fusion.

Some experimentists bring deuterium into contact with the absorptive surface of palladium or titanium by means of electrolysis under conditions of high density polarization.

Others instead, bring gaseous deuterium under pressure into contact with palladium or titanium.

All said, right up till today, experimentists have only had qualitative flashes of cold fusion of different intensities. No clear and valid explanation as to the dynamics of such fusions within a metal mass has as yet been individuated and offered so as to envisage the possible industrialization of cold fusion.

The aim of the present patent is that of indicating practical possibilities to create plants suitable for the production on an industrial scale of nuclear energy by resorting to the method of "controlled cold nuclear fusion" or "cold fusion" resultant of a plausible explanation regarding the dynamics of the phenomenon in question.

Said dynamics are based on the well-known aforementioned phenomena.

Hydrogen, present in an ionic or a nascent state during the process of welding steel, is absorbed by the metal and released by bead-welds during the cooling phase so that it passes into a molecular state.

Very often, however, and especially so in cases of rapid cooling of welded zones, the atomic hydrogen remains entrapped and gets diffused within the crystalline structure of the metal.

Whenever these diffusing hydrogen atoms meet up with an inclusion or a blow-hole ( both easily detected by a radiograph ) or with a quenching micro-crack or a micro-crack due to plastic deformation ( both of which cannot be detected by a radiograph), they are released, pass into a molecular state and create pressures which easily reach values of $10^7$ atm, depending on the extent of their influx.

Whenever the absorption of atomic hydrogen into steel or other metals is elevated, as happens during

2

the processes of pickling or electrolysis (among which the process of cathodic protection is very diffused) involving a high density of hydrogen ions on the cathodes, pressures within micro-cracks, due to the release of hydrogen, according to certain experts, reach extremely elevated values which, as stated further on, are claimed to be within the range of $10^{12}$ and $10^{24}$ atm; a field range within which inertial fusions take place.

Consideration has to be given to the fact that when cathodic protection is applied to off-shore structures (platforms and piers or floating vessels, such as oil carriers ) on which differences of potential towards the sea are imposed, usually -800 mV and very often even more negative (measured by means of an Ag/AgCl electrode), high density currents with high degrees of polarization by hydrogen and deuterium (the latter found within sea water to a ratio of 1:6000 with respect to hydrogen) are formed on the steel surfaces concerned as a consequence.

Now, if those extensively immersed surfaces of various structures in the phase of polarization were taken in consideration, it would be feasible to think that the absorption of deuterium has always been taking place, even though in very limited zones, with its subsequent release within probable cracks in the metal mass which in turn could have been causing flashes of so-called cold fusion without the likelihood of being discovered since no one up till now has ever had the intuition to perform a spectroscopy along said off-shore structures and vessels.

Founded on the statements above, the invention of the present patent refers to a process with relevant plants and devices for "controlled cold nuclear fusion" or "cold fusion" which envisages the absorption, at a high density level, of deuterium atoms or their mixture with tritium or helium by readily absorptive metals, such as palladium or titanium, for hydrogen and its isotopes, and their successive liberation within quenching cracks, cracks due to plastic deformation, intercrystalline or transcrystalline micro-cracks or any micro-discontinuities present within and among crystals, created within the metal mass by metallurgical or mechanical means or in any other possible way.

The strong influx into said cracks or micro discontinuities of self-liberating deuterium or deuterium-tritium atoms create such high pressures (practically between $10^{12}$ atm and $10^{24}$ atm ) that their nuclei interfuse.

Deuterium and mixtures thereof with tritium or helium are brought into contact with the absorptive metal surfaces either by the cathodic polarization of said surfaces during the electrolysis of pure heavy water, or heavy water containing tritium and helium; or, alternatively, through physical contact with deuterium or mixtures thereof with tritium or helium ,both in a pressurized gaseous state.

It is foreseen:
that this absorption occurs in the very same zone, as that of the metal element, which contains micro-discontinuities and therefore where fusions among the liberated nuclei occur; or - on the assumption according to which nuclear fusion phenomena among hydrogen isotopes generally take place only within micro-discontinuities in the metal masses- on the one hand, that the absorption of said isotopes occurs in an absorptive zone of the metal element devoid of cracks or any internal micro-discontinuities and, on the other hand, that the liberation occurs in another zone, contiguous to or distant from the former, which has to bear cracks or internal micro-discontinuities within its metal mass or pseudo-cracks between said metal element and another similar or dissimilar metal,endowed with a greater or lesser absorptive capacity, and which forcefully encompasses the former.

Furthermore, the intervention of electric fields, electromagnetic fields, radiation , laser beams or particle accelerators is foreseen for the energizing of the absorbed nuclei so as to increase their flow-velocity within the metal element and the kinetic energy acquired by said nuclei during the liberation stage.

The process herein described also foresees, especially so whenever the absorption of deuterium or mixtures thereof with tritium and helium is effected in gaseous phases, that the absorptive metal is subjected to temperature variations and that this absorption occurs when the metal is brought to a low or an extremely low temperature - approximately -200 °C; that is under the conditions of contraction or maximum contraction of the metal so that the micro-cracks are compressed or extremely compressed as a consequence.

When the temperature is raised once more, the resultant expansion of the metal causes the dilation of the micro-cracks, micro-cavities and discontinuities within which the atoms of deuterium or mixtures thereof with tritium or helium are drawn with the consequential occurrences of nuclear fusions.

The process under consideration can also be activated by using other metals in addition to those ones so particularly absorptive of hydrogen isotopes; especially in the case of steel it can be noticed that, during tempering, a large number of micro-cracks may be induced by suitable contrivances.

Generally, primary reactions of nuclear fusion come about when only deuterium is absorbed, as in accordance with the above-mentioned reactions 1) and 2), with the production of helium 3, tritium, protons

3

and neutrons. In the case of the absorption of the mixture of deuterium-tritium, as in reaction 3, an isotope of helium 4 plus neutrons will be produced with a very high energy release. Finally, in the case of the absorption of deuterium-helium 3, as in reaction 4), helium 4 will be produced plus protons with energy release.

Prior to describing the plants, and therefore, the devices required for the industrial exploitation of said process - respecting those cycles directly deducible from its description - it is necessary to point out the reasons why the argument that nuclear fusion reactions occur within the crystalline lattices of the absorptive metal, is of dubious credibility. A unit volume of palladium under cathodic charge can absorb over 2500 volumes of atomic hydrogen and therefore an equal volume of atoms of hydrogen isotopes.

Said atoms will fill up the vacuums ( interstices ) among the ions of the crystalline lattices and saturate the metal to its maximum. Taking into account that under such conditions a cubic centimeter of palladium is able to house more than sixty thousand billion billions of deuterium atoms within its crystalline lattices without causing distortions of said lattices, the chemical-physical reason remains inexplicable as to why within such a great mass of atoms such an extremely limited number of deuterium nuclei- like the number involved in the experiments carried out by only a few experimentists- is privileged towards nuclear fusions. It is a fact, instead, that the various deuterium atoms are entrapped within the crystalline lattice vacuums and retain their energy.

This energy is kinetic, relative to the empty spaces which each deuterium atom occupies but potential,relative to each space beyond those occupied. During the cathodic charge of palladium, the ions clustered between the double solid-liquid limit-layer are capable of reaching attractional forces comparable to pressures far beyond $10^{12}$atm , according to the equation of Nernst.

Said pseudo-pressurial forces , however, act at a right angle to said double metal-solution limit-layer so that along its surface there is no possibility for fusion to occur between contiguous deuterium ions since the latter are not subjected to these pseudo-pressurial forces.

On the other hand, the ions of the limit-layer are readily absorbed by palladium and are converted into an atomic state by gaining an electron.

The absorbed atoms then jump from one vacuum space to another until they tend to saturate the entire volume of palladium.

At this point, other deuterium ions, which through electrolysis of heavy water continue to polarize the surface of palladium, are converted to an atomic state in the liquid phase by gaining electrons from the solid phase and, through coupling themselves, form deuterium molecules which develop into gaseous phases emitted from the solution, which in turn is heated up. Basically, the kinetic energy possessed by each interstitial atom moves said atom within a spherical field contained in the vacuum which it occupies. This atom can leave said vacuum only by passing into another free vacuum and therefore has no possibility of colliding with another atom.

The situation becomes different very radically if there are transcrystalline, intercrystalline micro-cracks or micro-fractures in the metal mass.

These discontinuities affect a large number of interstitial vacuums.

Deuterium atoms and mixtures thereof with tritium or helium atoms flow from said vacuums towards said discontinuities.

This influx, in turn, increases the pressure explosively -definitely within the range of $10^{12}$and $10^{24}$ atm - thus causing nuclear fusion I a most likely sequence could be: molecular formation-pressure increase- formation of plasma-nuclear fusion).

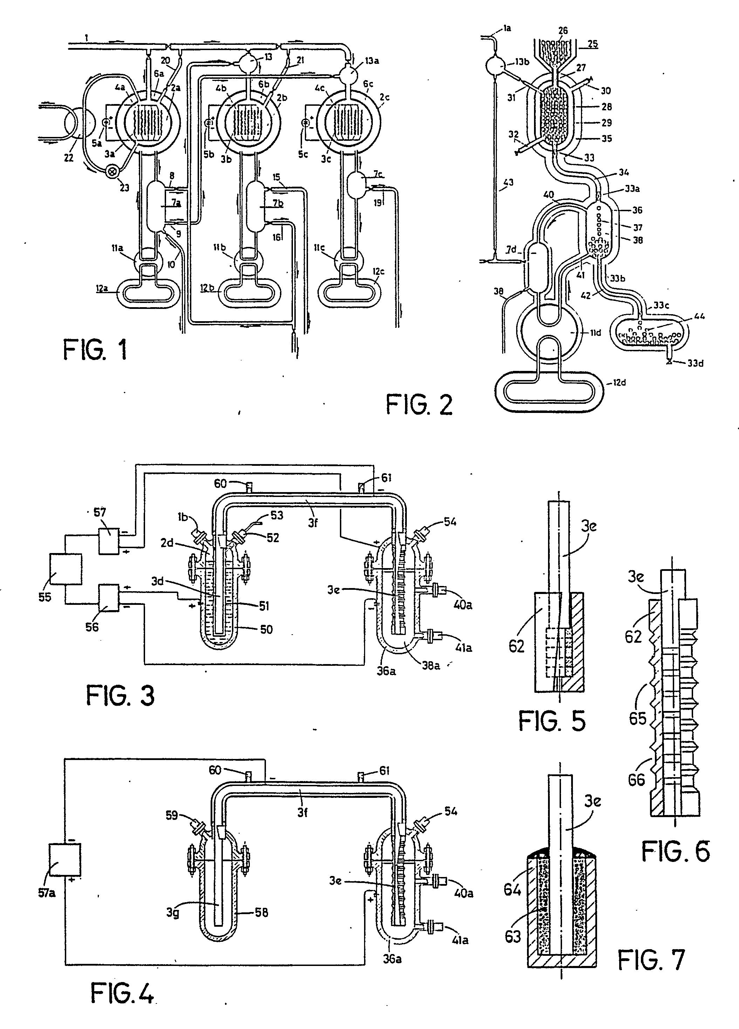

Assuming that the explanation of this phenomenon is valid, some possible cycles - as shown in the attached table- are described herebelow -respectively related to processes involving the absorption of deuterium or deuterium-tritium or deuterium-helium in electrolytic phases of pure heavy water or of heavy water containing tritium or helium (Figs.1 and 3) as well as to processes involving the absorption of deuterium or mixtures thereof with tritium or helium in a gaseous phase and under pressure (Figs.2 and 4).

Let us first describe the cycle involved in Fig.1.

It consists of three units which, as we will see further on, can either function in series or singularly, depending on the experimental results of the cycle.

These units consist of electrolytic batteries (2a,2b,2c), respectively , which are fed with pure heavy water or heavy water containing tritium or helium. Each battery is surrounded by a blanket ( 6a, 6b, 6c) containing lithium 6 or a mixture of lithium 6 and lithium 7.

Neutrons, radiation and any other nuclear fusion product emitting heat and regenerating tritium are conveyed within said blanket containing lithium 6 or mixture of lithium 6 and lithium 7.

At this point two problems are to be confronted; that is to avoid palladium or any other absorptive metal from melting during nuclear fusion and to maintain the newly produced nuclei, which are emitted by the micro-crack plasma, entrapped within the interstitial vacuums in an atomic state.

The first problem can be solved by using thin cathodic plates of palladium - or of any other absorptive metal -(3a, 3b, 3c), appropriately shielded to prevent hydrogen isotopes from mixing with oxygen and interposed respectively between anodic plates of platinized titanium (4a,4b,4c), for instance. The heavy water - fed via tube (1) - is cooled in each battery by means of a circuit under forced circulation formed by a heat exchanger (22) and a circulating pump (23) or by means of any other current system used in nuclear plants.

This circuit is shown in Fig.1 only with regard to the first battery but applies to the remaining ones as well.

It goes without saying that the cathodic plates (3a, 3b, 3c) have to be manufactured and treated in such a way as to contain a large number of cracks.

D.c. feeding of batteries is ensured via independent generators (5a, 5b, 5c) or via a single generator for all of them.

These batteries are gas- and vapour-tight. Safety valves and discharge devices are found on the battery roofs. The latter are for the discharge of oxygen and other gaseous elements -resultant from nuclear reaction -which may be liberated by the solution - as well as those hydrogen isotopes which are not absorbed. Entrapment of elements, resulting from nuclear fusion, can be avoided by means of electromagnetic fields or any other known technique.

Alternatively, entrapped gaseous elements can be recovered by saturating the cathodic plates through appropriate treatment.

The cycle described is supposed to control fusion processes in accordance with the already mentioned reactions 1),2),3) and 4) in such a way that the first two distinctly occur in the electrolytic battery (2a) and the remaining two in the second battery (2b) and in the third battery (2c), respectively.

It is also assumed that apart from radiation and plasma neutrons - which are absorbed by the lithium blanket -also all other elements resultant of nuclear fusion are absorbed by said lithium and that the various reactions occur in accordance with the scheme which follows.

As can be noted from Fig.1, the molten lithium is cooled within heat exchangers (11a, 11b, 11c).

These heat-exchangers in turn heat up the fluid which feeds the boilers (12a, 12b, 12c) for the production of steam.

The lithium, before entering the heat exchangers, passes through the reaction-product extractors.

Within extractor (7a) the following are recovered separately:

- tritium which via the tube (8) feeds the mixer (13) pertaining to the second battery (2b).

Said mixer (13) is also simultaneously fed by deuterium via tube (1);

- helium (3), which via the tube (9) is directed towards the mixer (13a) pertaining to battery (2c);

- helium (4) and hydrogen discharged via tube (10).

Within extractor (7b), helium 4 and tritium are recovered separately; the latter is a product resultant from the reaction between lithium and neutrons. It can be used, as will be indicated further on, to feed the same battery (2b),when functioning isolatedly, while it exits from the cycle together with helium 4,when batteries are functioning in series.

Within extractor (7c), helium 4 and hydrogen are

FLOWSHEET OF FUSION REACTIONS
IN ACCORDANCE WITH THE CYCLE THROUGH ELECTROLYTIC CELLS

$Li_3^6$ (nnnppp)   $4D_1^2$ (4.np)     $2Li_3^6$ (2.nnnppp)   $2D_1^2$ (2.np)     $D_1^2$ (np)

**Section**

**cell**

$$2D_1^2 \rightarrow H_{e2}^3 + n \quad (2.np \rightarrow nnp + n)$$

$$2D_1^2 + 2T_1^3 \rightarrow 2H_{e2}^4 + 2n \quad (2np + 2nnp \rightarrow 2nnpp + 2n)$$

$$D_1^2 + H_{e2}^1 \rightarrow H_{e2}^4 + H_1^1 \quad (np + np \rightarrow nnpp + p)$$

$$2D_1^2 \rightarrow T_1^3 + H_1^1 \quad (2np \rightarrow nnp + p)$$

**blanket**

$$Li_3^6 + n + T_1^3 + H_{e2}^3 + H_1^1 \quad (nnnppp + n + nnp + npp + p)$$

$$2Li_3^6 + 2n + 2H_{e2}^4 \quad (2.nnnppp + 2n + 2nnpp)$$

$$2T_1^3 + H_{e2}^3 + H_{e2}^4 + H_1^1 \quad (2.nnp + npp + nnpp + p)$$

$$2T_1^3 + 4H_{e2}^4 \quad (2.nnp + 4.nnpp)$$

**extraction of tritium**

$2T_1^3$ (2.nnp) $\longrightarrow$ $2T_1^3$ (2nnp)

**extraction of helium + hydrogen**

$H_{e2}^4 + H_1^1 + H_{e2}^3 \longrightarrow$   $4H_{e2}^4$ (4nnpp)   $H_{e2}^4$   $H_1^1$

(nnpp)   p   npp

$H_{e2}^4$ (nnpp)   $H_1^1$ (p)   $2T_1^3$ (2.nnp)   $4H_{e2}^4$ (4.nnpp)   $H_{e2}^4$ (nnpp)   $H_1^1$ (p)

extracted instead.

As is stated above, battery (2b) can also function isolatedly. In fact, once fusion reaction is activated with tritium, the latter is regenerated within the lithium blanket , recovered within extractor (7b) and recycled via tube (16) into mixer (13) where deuterium is introduced.

In this case, only helium 4 is obtained as the final product of the reaction.

It is, however, essential that no neutron losses whatsoever occur if this cycle is to function. Consequently, it is imperative for the lithium blanket to contain a neutron multiplier which goes into action when

6

necessary. Beryllium rods, for example, can be immersed into or pulled out of said lithium blanket accordingly. The three batteries can be fed with heavy water; each directly via tube (1) or in series via tubes (1, 20, 21).

It goes without saying that usual electrolytic cells with one or more cathodes may be used instead of batteries.

Description of the cycle in Fig.2.

As stated, this cycle is fed by gaseous deuterium and can be constituted by a sole section or, as in the former cycle, by three practically equal sections in series.

Fig.2 shows a single section. Its functioning is herein described as the first section of the cycle.

Small dimensional elements (26), preferably spheres of palladium or of any other hydrogen-absorptive metal, are contained within a hopper (25).

These elements are either metallurgically or mechanically treated so that cracks or discontinuities are created in their metal masses. These minute spheres, via the feeder tube (27), load the container cooler (28).

This container is in turn housed within a vessel (29). After having vacuumised the cooler (28) via the outlet (32), liquid nitrogen is introduced into vessel (29) via inlet (30) and allowed to evaporate so as to reduce the temperature of said minute spheres to extremely low values (between -100 and -200° C). At this point, the gaseous deuterium under pressure is forced via tube (31) in order to saturate said minute spheres

Under such low temperatures no nuclear fusion should occur owing to the very decided contraction of the material which, consequently and practically, close up all cracks.

However, for safety reasons,vessel (29) is provided with a blanket of lithium, not shown in the figure, which is a part of the shielding system (35).

Said minute spheres flow from the container (28) into the reactor (36)- containing molten lithium (38) at an elevated temperature -through the shutter 33, the tube (34) and another shutter (33a).

The minute spheres (37), once saturated with deuterium, undergo a very pronounced expansion as a result of their passage from the low temperature of cooler (28) to the elevated one of said reactor (36). Consequently, all existent cracks in the masses of said minute spheres are dilated accordingly.

The liberation of deuterium into these cracks occurs with an explosive increase in pressure ( between $10^{12}$ and $10^{24}$ atm ) and the fusion among hydrogen isotopes as described in the previous cycle.

For obvious reasons, the minute spheres (37) have to be confined, individually or in groups, along the central axis of the molten-lithium reactor (36), for the stretch in which nuclear fusion occurs and terminates with or without the intervention of particle accelerators, laser beams, other radiation or electromagnetic fields which favour fusion.

Therefore, said minute spheres, whenever required, must contain or must, however, be provided with iron particles.

The aforesaid confinement is obtained by one or more magnetic fields which, furthermore, have to adjust the descending velocity of the spheres in the stretch involved in nuclear reaction as well as to arrest the single sphere or groups of spheres within the section subjected to the intervention of particle accelerators,laser beams or of any radiation in accordance with the timely sequence required for the action of such interventions.

The same confinement system is adopted in the cooler whenever nuclear fusions occur within it.

Lithium passes from the reactor (36), via the tube (40), into the heat-exchanger (11d) which feeds the vaporizer (12d) for the production of electrical energy.

The temperature of the lithium is remarkably raised owing to nuclear fusion reactions but is constantly kept below the melting point temperature of palladium. The lithium, before cooling, passes into the extractor (7d) for tritium and other reaction products such as helium 3, helium 4 and hydrogen.

The molten-lithium reactor can also be provided with inclined plane sectors so that the flow of the palladium spheres is syncronized to that of the lithium from the extractor (7d).

Naturally, the whole plant has to be protected against radiation.

The first section of the second cycle has now been described in which the two nuclear reactions 1) and 2) occur. Said cycle, as has already been stated, releases tritium, helium 3, helium 4 and hydrogen as reaction-products; those which are produced naturally in the first section of the first cycle, concerned with the electrolysis of heavy water for the production of deuterium.

Therefore, if two more sections, practically identical to the first one,are added to the section of Fig.2, a complete gaseous deuterium cycle is set up which is totally similar to that for elecrolytic deuterium.This is achieved by utilizing the tritium of the first section plus deuterium to effect fusions, in accordance with reaction 3),in the second section; and helium 3 of the first section as well, plus gaseous deuterium in the third section to obtain fusions in accordance with reaction 4).

Obviously, the spheres of palladium or of any other suitable metal are recycled whenever the liberation of the reaction-products occur within the reactors, resorting - when necessary -to electromagnetic fields, laser beams or radiation.

Contrariwise, said products are recovered by means of suitable chemico-physical processes.

The above-described cycle can also function with one section only in accordance with reaction 3), once said reaction is sparked off with deuterium or tritium -then using deuterium only and recycling tritium from extractor(7d) to mixer (13b) via tube(43).

The cycles as in Figs.3 and 4 are traced out herebelow. Said cycles foresee the absorption of hydrogen isotopes and their liberation in distinctly separate areas on one or more elements of palladium, titanium or other metals readily absorptive of hydrogen and its isotopes; the areas for absorption must be absolutely devoid of cracks whereas the areas for liberation must contain cracks.

These cycles are also set forth in the attached table and are herewith clearly described. They foresee the absorption of hydrogen isotopes via electrolysis or in a gaseous phase.

Fig.3 shows the cycle for a plant regarding the absorption of isotopes via electrolysis. This cycle consists of an electrolytic cell (2d) whose container (50) itself can constitute the anode of the cell if made of metal having an indissoluble internal surface, such as of titanium with a platinized or activated internal surface.

Obviously, said cell can also be made of other metal or non-metal material with a traditional anode.

In said cell a cathode (3d) is housed within the container (50) and is electrically isolated from it. This cathode is made of palladium or titanium - or any other material readily absorptive of hydrogen and its isotopes - and presents a prevalently cylindrical or suitably shaped surface which, on its immersed part, is aptly treated so as to increase its absorptive capacity. This cathode is accomodated within a non-metallic tube (51) provided with fin-louvers.

Pure heavy water or heavy water with tritium or helium flows from tube (1b) and is contained within the cell whereas oxygen is discharged from tube (52) and deuterium and/or tritium and helium - collected via tube (51) - are discharged from tube (53).

The cathodic element (3d) protrudes from cell (2d) in such a way that the other extremity (3e)is accomodated within reactor (36a) which contains a molten mixture (38a) of lithium 6 and lithium 6 plus 7.

Reactor (36a) is kept under a vacuum through tube (54). The mixture of molten lithium is sucked out via tube (40a) and, subsequent to the extraction (mainly) of tritium and the heat-exchange with water for the production of steam, it is reintroduced into reactor (36a) via tube (41a).

Reactor (36a) in vanadium or any other metal with a low radioactivity accumulation is connected up to the negative pole of a d.c.generator whose positive pole is, for obvious reasons, connected to the titanium container (50) pertaining to cell (2d).

Extremity (3e) of the palladium or titanium element can be manufactured as exemplified in Figs. 5,6 and 7 -explained further on. The horizontal stretch (3f) pertaining to the palladium or titanium element can be subjected to electromagnetic fields or to other interventions capable of energizing the atoms or ions of deuterium, tritium or helium as well as of accelerating their flow towards extremity (3e).

An alternative scheme can be that as indicated in Fig.3. This is formed by an oscillator (55) with d.c. outputs dephased at 180°, reciprocally. Each output is separately connected to a power amplifier.

Power amplifier (56) causes the electrolysis of the heavy water and the other one (57) creates an electronic flow which has the same direction as the flow of deuterium and tritium.

The two circuits pertaining to the power amplifiers start functioning alternatingly and for a predetermined time at a predetermined frequency.

Fig.4 shows the cycle with absorption of deuterium or deuterium-tritium and deuterium-helium in a gaseous phase.

The absorptive extremity (3g) of the palladium or titanium element is inserted into container (58) which has deuterium or a deuterium-tritium /deuterium-helium mixture - under pressure - introduced via tube (59).

The cycle beyond container (58) is that which has already been described above , in Fig.3.

Container (58) can house a serpentine for the evaporation of liquid nitrogen so as to increase the absorptive capacity of element (3g).

The d.c. feeder (57a) performs the same function as that of (57), as described in the previous cycle.

Extremity (3e) immersed in molten lithium has to be treated so as to have cracks or microdiscontinuities in the metal mass. It can also be assembled as in Figs.5 and 6 where a heated sleeve is forced over this extremity - and its ends may be welded - in order to create pseudo-cracks. Fig. 7 ,alternatively, shows this extremity encompassed within a sleeve comprising a cavity wall filled with forcefully pressed granules. The upper free end of this sleeve is then welded up. The fitting of the sleeves over the extremities, the lapped finishing of the surface of extremity (3e) and that of the various sleeves have to be realized under a high vacuum.

In any case, sizes of these extremities and thicknesses of sleeves have to be such that the heat produced by nuclear reaction is rapidly dispersed within the lithium so as to avoid the fusion of the palladium or the titanium.

This can be achieved by various means such as,by manufacturing the extremities (3e) in a bunch which groups numerous cylindrical elements of small diameter with internal cracks ,even obtained by resorting to the method illustrated in Figs. 5,6 and 7; or,also, by reducing the number and the surface extension of the micro-cracks and,finally, by setting the liberation frequency and duration.

For the sake of simplicity, the attached table and the description refer to a single element of palladium or titanium within cell (2d) and container (58), and consequently in reactors (36a). Plants, instead, can comprise a set of numerous elements each having a small section whose extremities are accomodated within cell (2d), container (58) and reactors (36a) sufficiently distant from one another to obtain an elevated measure of absorption and, above all,an excellent dispersion of heat.

The palladium or titanium sleeves can indiscriminately be forced onto the titanium or palladium extremities (3e).

The entire plant, and especially so the reactor zone, must be dissipated of its heat and protected by any known suitable means.

Finally, stretch (3f) is contained within a casing in which liquid deuterium is introduced through tube (60) in order to cool said stretch. This liquid deuterium then evaporates and is discharged via tube (61).

Cooling by means of deuterium prevents losses of same absorbed along stretch (3f).

It is to be understood that any other system or plant for the production of nuclear energy which in any case foresees the absorption of hydrogen or its isotopes by elements in titanium,palladium or any other suitable material and the fusion of their nuclei due to their liberation into cracks induced into the mass of said material or between the latter and the forced onto sleeves, is contemplated by the present patent.

## Claims

1. The process for "controlled cold nuclear fusion" or "cold fusion", characterized by the fact that this process foresees:

a) The absorption - at high density - of deuterium atoms or mixtures thereof with tritium or helium atoms on the part of palladium, titanium or any other metal elements and the possible energizing of said atoms or mixtures thereof by means of electric flows, electromagnetic fields, radiation, laser beams and particle accelerators;

b) The successive liberation of said atoms or mixtures thereof within quenching cracks or cracks due to plastic deformation, intercrystalline- or transcrystalline-micro-cracks or any micro-discontinuities within and among crystals, created in the metal masses of said elements either by metallurgical or mechanical means or by any other known or possible means deemed appropriate and the achievement within these cracks of extremely elevated pressures, between $10^{12}$ and $10^{24}$ atm, caused by the liberation of deuterium atoms or of the above-mentioned mixtures of atoms, flowing into said cracks,so as to potentiate their nuclei with kinetic energy which enables them to surpass the Coulomb barrier, with the resultant fusion among themselves in accordance with any one or more of the following known reactions, depending on plasma compositions:

1 ) $D_1^2 + D_1^2 \rightarrow T_1^3 + H_1^1 + 4{,}03$ MeV

2 ) $D_1^2 + D_1^2 \rightarrow He_1^3 + n_0^1 + 3{,}27$ MeV

3 ) $D_1^2 + T_1^3 \rightarrow He_2^4 + n_0^1 + 17{,}50$ MeV

4 ) $D_1^2 + He_2^3 \rightarrow He_2^4 + H_1^1 + 18{,}34$ MeV

The first two, as a norm, occur simultaneously and to a ratio of 50:50;

c) The release of nuclear energy, also directly, within the molten lithium wherein said metal elements, inside which nuclear fusion takes place, are immersed. This differs to what happens in those other known fusion processes where nuclear energy is released within the molten lithium but only after said energy has passed through a vacuumised space and a thick metal wall, resulting in a loss of energy and the short duration of said metal wall.

2. The process as under claim 1, characterized by the fact that deuterium or mixtures thereof with tritium or helium are brought into contact with an absorptive metal surface by means of the cathodic polarization of this metal surface during the electrolysis of pure heavy water or heavy water containing tritium or helium.

3. The process as under claim 1, characterized by the fact that deuterium or mixtures thereof with tritium or helium are brought into contact with an absorptive metal surface by means of the physical contact with said surface of deuterium or mixtures of hydrogen isotopes in a gaseous phase and subjected to pressurization and/or to a low temperature.

4. The process as under claims 1 and 3, characterized by the fact that the absorption and the subsequent liberation of deuterium or mixtures of hydrogen isotopes also take place on small size elements of palladium or titanium or of any other metal readily absorptive of hydrogen and its isotopes, said elements generally being of a volume inferior to a cubic centimeter, preferably in the form of minute balls with internal cracks; said elements, when composed of non-ferrous material, shall at least contain a small percentage of iron.

5. The process as under claims 1, 2 and 3, characterized by the fact that ,on the one hand,the absorption of deuterium or mixtures of hydrogen isotopes also occurs on an extremity or a zone of palladium,titanium or another metal element devoid of internal cracks or micro-discontinuities and,on the other hand, their subsequent liberation occurs on the other extremity of said metal element or on another zone of it adjacent to or distant from the former and which, however , has to contain internal cracks or micro-discontinuities; said micro-discontinuities may also be pseudo-cracks effected between the surface of said extremity and sleeves, made of palladium or titanium, tightly fitted over said extremity.

6. The plant for the process as under claims 1 and 2, characterized by the fact that the absorption and subsequent liberation of hydrogen isotopes take place within an electrolytic unit fed by pure heavy water, or heavy water with tritium or helium ; said plant comprising:
- an electrolytic battery (2a) composed of a certain number of cathodic elements ( 3a)- made of palladium, titanium or any other metal readily absorptive of hydrogen and its isotopes - in the form of reduced-thickness plates, provided with internal cracks and interwalled by very thin anodic plates ( 4a) made of an indissoluble metal or a metal whose surface is rendered indissoluble;
- a removable top-cover for said battery fitted with: an inlet for heavy water via feeder tube ( 1 ) ; an outlet for the discharge of oxygen; an outlet for the discharge of those hydrogen isotopes not absorbed by cathodes and released in a molecular state as well as for the discharge of those hydrogen isotopes, produced by nuclear reactions, which may liberate themselves from cathodes and are conveyed by the usual fin-louver-or bell-chambers surrounding said cathodes;
-a circuit for the cooling of heavy water forcedly circulated by means of a pump (23) through a heat-exchanger ( 22);
- a blanket (6a) surrounding said battery either in direct contact or spaced by a vacuumised annular chamber, within which blanket the lithium 6 , or a mixture of lithium 6 and lithium 7, is contained for the absorption of neutrons, radiation and other products caused by fusion with the consequential release of heat and the regeneration of tritium which is the isotope indispensable for the feeding of the battery whenever fusion between deuterium and tritium is required;
- a primary circuit, under pump-forced ( whenever necessary) circulation, to cool the lithium within the heat-exchanger (11a), from which primary circuit a second circuit branches out to heat-feed the vessel (12a) for the production of steam; - an extractor (7a), found on the circuit which delivers lithium to the heat-exchanger (11a), for the recovery of the regenerated tritium and the other aforementioned products, in accordance with the reaction formulas under claim 1 , which result from fusions depending on the composition of the heavy water fed into the battery;
- a d.c. feeder (5a) equipped with a timer for the functioning of the electrolysis in accordance with time durations and frequencies required for the fusion process.

7. The plant for the process as under claims 1,2 and 6 characterized by the fact that said plant is composed of the three units, described under claims 6, which function in series and which as an integral whole execute the four reactions formulated under claim 1 .
The first unit is fed by pure heavy water and the remaining units are fed by heavy water mixed with those hydrogen isotopes recovered by the extractor pertaining to the first unit.

8. The plant for the process as under claims 1,2,6 and 7 characterized by the fact that the electrolysis occurs within normal electrolytic cells instead of within batteries.

9. The plant for the process as under claims 1,3 and 4 characterized by the fact that is consists of one unit fed by gaseous deuterium or a gaseous mixture of deuterium-tritium or deuterium-helium ; said unit comprises:
- a hopper (25) for the feeding of the reduced-volume elements, or the minute balls (26), which elements or balls are provided with internal cracks;

- a container-cooler (28), fed by the hopper (25), fitted with an outlet (32) for its vacuumising and an inlet (31) for its feeding with deuterium or a mixture thereof with tritium or helium under pressure;

- a container (29),concentrically surrounding the container-cooler (28), into which liquid nitrogen is introduced via inlet (30) and allowed to expand;

- a reactor (36),containing molten lithium 6 or a mixture of molten lithium 6 and 7 (38), into which the minute balls drop respecting a rhythm predetermined by the electromagnetic fields which confine said balls towards the central axis ( 37) of said reactor and arrest their movement in accordance with the time sequence required for the intervention of the particle accelerators, laser beams or any other radiation and within which reactor hydrogen isotopes are liberated inside the cracks of said minute balls with the consequential direct absorption, by the lithium, of neutrons and radiation released through the phenomenon of fusion, with the resultant production of heat and regeneration of tritium as an outcome of the reaction between lithium and neutrons;

- a heat-exchanger (11d) within which the molten lithium is cooled and a fluid heated for thermal exchange within the boiler (12d) in order to produce steam;

- an extractor (7d) to recover tritium and other reaction-products - depending on the composition of the gas which feeds the container-cooler (28)- from the hot molten lithium before conveying the latter to the heat-exchanger (11d);

-a collector (44) which gathers the minute balls once fusion is terminated.

10. The plant for the process as under claims 1,3,4 and 9 characterized by the fact that it consists of three units in series as under claim 9 within which units nuclear fusion may occur in accordance with the four reaction formulas as under claim 1.

11. The plant for the process as under claims 1,2 and 5 characterized by the fact that it consists of:

-an electrolytic cell whose container (50), if of titanium, may itself function as an anode,confined to its platinized or activated internal surface.

The top cover of said cell bears: an aperture provided with an electro-insulating and gas-tight collar, through which aperture the cathodic element (3d), electrically insulated from container (50),passes; an inlet (1b) for the feeding of pure heavy water or heavy water containing tritium or helium 3; an outlet (52) for the discharge of oxygen; an outlet (53) for the discharge of those hydrogen isotopes, not absorbed by the cathode, which are collected by the usual bell-chamber (51) surrounding said cathode;

-a titanium or palladium element prevalently cylindrical, having an extremity absolutely devoid of internal cracks or internal micro-discontinuities which constitutes the cathode (3d) within cell (50) and protrudes out of said cell (3f);

-a reactor (36a) which may be made of vanadium or another metal with low radioactivity-accumulation properties and which contains molten lithium 6 or a mixture of molten lithium 6 and 7 (38a) into which the other extremity (3e) of said titanium or palladium element is immersed in such a way that it is electrically insulated from the top cover of the reactor (36a); said extremity (3e) having internal cracks or internal micro-discontinuities so that an immediate and direct absorption -into the lithium - of neutrons, radiation and nuclear reaction products occurs resulting in the release of heat and the regeneration of tritium.

Furthermore, an outlet (54) for the recovery , also under a vacuum, of nuclear reaction gaseous products is provided on the top cover of the reactor;

- a d.c. generator of variable current and voltage, fitted with a timer for the functioning of electrolysis in accordance with predetermined cycles, whose positive pole is connected to the cell wall (50) and whose negative pole is connected to that of the reactor (36a). It is, however, clear that said positive pole relative to the generator may instead be connected to an immersed anode within cell (50) when this cell is of the usual type and that said negative pole may instead be either connected to electrodes immersed in the lithium (38a) of the reactor (36a) or directly to the palladium or titanium extremity (3e);

-a circuit for the cooling of lithium, for the heating of the steam boiler and for the extraction of tritium and other nuclear fusion products, as described with reference to the plants as under claims 6 and 9;

12. The plant for the process as under claims 1,3,5 and 11 characterized by the fact that, instead of within an electrolytic cell, the absorption occurs within a container (50) into which deuterium or a mixture thereof with tritium or helium is introduced in a gaseous state and under pressure; said container (50) houses a serpentine for the cooling of hydrogen isotopes.

13. The plant for the process as under claims 1,2,3,5,11 and 12 characterized by the fact that the intermediate stretch (3f) of the palladium or titanium element between the two extremities (3d-3e) or (3g-3e) is sufficiently long in order to be subjected to the influence of electromagnetic fields, laser beams, radiation, particle accelerators or any other appropriate means capable of energizing the atoms or ions of hydrogen isotopes and of speeding up their flow towards the extremity contained within the molten lithium reactor (36a).

14. The plant for the process as under claims 1,2,3,5,11,12 and 13 characterized by the fact that the intermediate stretch (3f) pertaining to the element made of palladium, titanium or of any other metal readily absorptive of hydrogen isotopes is housed within a tube electrically insulated from said stretch and within which tube liquid nitrogen introduced via the inlet (60) is left to evaporate and is discharged in a gaseous state via the outlet (61) in order to cool said element . It is furthermore foreseen that said cooling is achieved by means of deuterium in a liquid state or a mixture of hydrogen isotopes released in a gaseous state under pressure also to avoid the liberation of hydrogen isotopes along the aforementioned stretch.

15. The plant for the process as under claims 1,11,12,13 and 14 characterized by the fact that the element made of palladium or titanium is replaced by a nest of small-diameter elements and that their extremities, and especially those extremities (3e) immersed in reactor (36a), contain internal cracks and are sufficiently spaced from one another in order to obtain an elevated dispersion of heat within the molten lithium (38a).

16. The plant for the process as under claims 1,11,12 and 13 characterized by the fact that, in order to energize the hydrogen isotopes along the stretch-element or the nest of elements (3f), between the absorption zone and the fusion zone, as well as to provoke said absorption and fusion alternately , an electric circuit is employed , composed of an oscillator (55) with d.c. outputs dephased by 180 ° ; each of said outputs feeds a power amplifier; one of said two amplifiers (56) causes the electrolysis of the heavy water while the other one (57) determines a flow of electrons in the same direction as that of the hydrogen isotopes; both said power amplifiers operate alternately and for predetermined durations in accordance with the set oscillator, depending on the requirements of nuclear fusion operation cycles.

17. The plant for the process as under claims 1,11,13,14,15 and 16 characterized by the fact that the absorption of hydrogen isotopes in a gaseous phase may occur directly within the titanium or palladium element preceding reactor (36a) that is within the stretch (3f) of suitable length whose outer tube houses the mixture of hydrogen isotopes introduced therein in a liquid state and then allowed to evaporate under pressure thus the container (58) is excluded from the plant.

18. The plant for the process as under claims 1,11,12 and 15 characterized by the fact that the cracks on the extremities (3e) of the palladium elements , which extremities are within the reactors (36a),may also be pseudo-cracks ( Figs. 5, 6,7 ) either effected between the surface of said extremities (3e) and the sleeves (62) tightly fitted over said extremities or realized through the contact of strongly compressed granules (63) within the narrow interspace of said sleeves (64). These sleeves may be welded to the extremity of the metal element cointained therein and may also be in metal that has a lesser or greater absorptive capacity than that of the metal of the extremities.

The thickness, the diameter and the longitudinal shape of said sleeves must be such that the heat resulting from fusion reaction may diffuse rapidly within the lithium.

The sleeve (62) in Fig.6 shows a method of obtaining pseudo-cracks; said sleeve bears sharp annular ridges (65) interwailed by short cylindrical grooves (66). A strong but appropriately dosed pressure by means of rolling is exerted onto said cylindrical grooves so as to obtain pseudo-cracks in correspondence with said annular ridges ; said pseudo-cracks having the right surface extensions to be determined in accordance with the experimental results of the fusion process.

The surfaces of the extremities (3e) within said sleeves and the internal surfaces of said sleeves have to be lapped ; furthermore any operation relative to said extremities and sleeves have to be effected under a vacuum.

19. The plant for the process as under claims 1,6,9,11 and 12 characterized by the fact that the blankets (6) and the reactors (36) may be provided with berillium rods which are movable in such a way that they are immersed into the lithium whenever the multiplication of neutrons is required.

FIG. 1

FIG. 2

FIG. 3

FIG. 4

FIG. 5

FIG. 6

FIG. 7